Europäisches Patentamt

European Patent Office

Office européen des brevets

(11) Veröffentlichungsnummer: **0 009 591**

A1

## (12) EUROPÄISCHE PATENTANMELDUNG

(21) Anmeldenummer: **79103052.1**

(22) Anmeldetag: **20.08.79**

(51) Int. Cl.³: **H 04 M 9/10**

(30) Priorität: **28.09.78 DE 2842369**

(43) Veröffentlichungstag der Anmeldung:
**16.04.80 Patentblatt 80/8**

(84) Benannte Vertragsstaaten:
**AT CH FR GB IT NL SE**

(71) Anmelder: **SIEMENS AKTIENGESELLSCHAFT Berlin
und München
Postfach 22 02 61
D-8000 München 22(DE)**

(72) Erfinder: **Walla, Klaus
Schrimpfstrasse 12
D-8035 Gauting(DE)**

(54) Schaltungsanordnung für eine sprachgesteuerte Lautfernsprechstation in Fernmelde-, insbesondere Fernsprechanlagen.

(57) Schaltungsanordnung für eine sprachgesteuerte Lautfernsprechstation in Fernmelde-, insbesondere Fernsprechanlagen mit kanalindividuellen Verstärkern und mit einer Sprechrichtungserkennungsschaltung, die in Abhängigkeit von einem Spannungsvergleich Dämpfungsglieder in beiden Kanälen so steuert, daß in den Kanal mit der höheren Sprechspannung die Dämpfung verringert und in den Kanal mit der niedrigeren Sprechspannung die Dämpfung entsprechend erhöht wird.

Die von den Mikrofon- und Lautsprecherspannungen abgeleiteten Signalspannungen werden jeweils über Operationsverstärker den Gleichrichteranordnungen zugeführt. Dadurch wird die Schwellenspannung der Gleichrichterdioden praktisch eliminiert, so daß starke Regelschwankungen auf den Verbindungsleitungen besser beherrscht werden können.

EP 0 009 591 A1

./...

0009591

— 1 —

SIEMENS AKTIENGESELLSCHAFT          VPA 78 P 6 2 4 3 EUR
BERLIN UND MÜNCHEN

Schaltungsanordnung für eine sprachgesteuerte Lautfernsprechstation in Fernmelde-, insbesondere Fernsprechanlagen.

Die Erfindung betrifft eine Schaltungsanordnung für
eine sprachgesteuerte Lautfernsprechstation in Fernmelde-, insbesondere Fernsprechanlagen mit kanalindividuellen Verstärkern und mit einer Sprechrichtungserkennungsschaltung, die in Abhängigkeit von einem
Spannungsvergleich Dämpfungsglieder in beiden Kanälen
so steuert, daß in dem Kanal mit der höheren Sprechspannung die Dämpfung verringert und in dem Kanal mit
der niedrigeren Sprechspannung die Dmpfung entsprechend
erhöht wird.

Bei einer Lautfernsprechstation muß zur Vermeidung
der akustischen Rückkopplung die Senderichtung bedämpft werden, wenn die Empfangsrichtung entdämpft

Som 1 Stl / 28.9.1978

wird und umgekehrt. Die Steuerung der erforderlichen Dämpfungsglieder erfolgt dabei durch die Sprechrichtungserkennungsschaltung. An diese Sprechrichtungserkennungsschaltung werden unter anderem folgende sich teilweise wiedersprechende Forderungen gestellt, schnelles Ansprechen, damit keine Anfangssilben verlorengehen, Vermeiden von Unterbrechungen zwischen den einzelnen Silben, die Möglichkeit zum Zwischensprechen der Gegenstation und einwandfreies Funktionieren auch bei Hintergrundgeräuschen.

Der ankommende Pegel auf einer Fernsprechverbindungsleitung kann durch unterschiedliche Leitungsdämpfung und Sprechereinfluß in einem Verhältnis 1 : 1000 schwanken. Daraus folgt, daß die Sprechrichtungserkennungsschaltung sowohl bei Signalen von 1 V als auch von 1 mV einwandfrei arbeiten muß. Da eine Signalverarbeitung erst nach einer Gleichrichtung der Sprechspannungen möglich ist, diese Gleichrichtung aber immer mit einer Schwellenspannung in der Größenordnung einiger Zehntel Volt behaftet ist, treten Probleme bei der Signalverarbeitung auf. Durch Vorverstärkung der oben erwähnten 1 mV auf ca. 0,7 V würde die Schwellenspannung keine Rolle mehr spielen, die maximale Signalspannung würde dann aber bei 700 V liegen. Dieses Problem wurde bisher in der Weise gelöst, daß Steuerverstärker vorgesehen wurden, die als logarithmische Steuerverstärker ausgebildet sind, deren Ausgangsspannungen im gesamten Bereich der Sprechspannungen ohne Begrenzungen dem Logarithmus dieser Sprechspannungen proportional sind. Derartige logarithmische Steuerverstärker stellen aber einen erheblichen Schaltungsaufwand dar. Die Aufgabe der Erfindung besteht darin, eine Schaltungsanordnung der eingangs genannten Art anzugeben, bei der die auftretenden großen Pegelschwankungen mit einfachen schaltungstechnischen Maßnahmen beherrscht werden können.

Diese Aufgabe wird für eine Schaltungsanordnung der eingangs genannten Art erfindungsgemäß dadurch gelöst, daß von den Mikrofron- bzw. Lautsprecherspannungen abgeleitete Signalspannungen jeweils einem invertierenden Operationsverstärker mit pegelabhängiger Gegenkopplung zugeführt werden, wobei sowohl für die positiven als auch die negativen Halbwellen der Ausgangsspannung des Operationsverstärkers ein separater Gegenkopplungsweg vorgesehen ist und der Ansprechpegel der Gegenkopplung durch in den Gegenkopplungswegen angeordnete Dioden bestimmt ist, und daß die Ausgangsspannungen dieser Operationsverstärker einem Komparator zugeführt werden, dessen Ausgangssignal auf die Dämpfungsglieder wirkt.

Bei der erfindungsgemäßen Schaltungsanordnung wird durch den Einsatz von Operationsverstärkern die Schwellenspannung der notwendigen Gleichrichterdioden praktisch eliminiert. Dadurch ist es auf einfache Weise möglich, die auf den Verbindungsleitungen anfallenden großen Pegelschwankungen zu beherrschen.

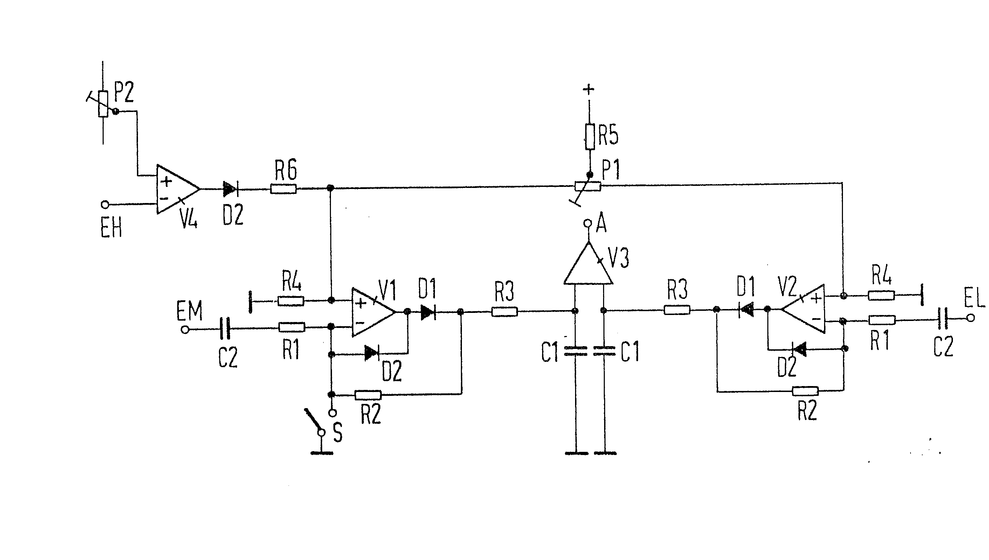

In der Zeichnung ist ein Ausführungsbeispiel der erfindungsgemäßen Schaltungsanordnung dargestellt, an dem nähere Einzelheiten der Erfindung nachfolgend erläutert werden sollen.

In der Zeichnung ist eine Sprechrichtungserkennungsschaltung einer sprachgesteuerten Lautfernsprechstation gezeigt, die gemäß der Erfindung aufgebaut ist. Die gezeigte Sprechrichtungserkennungsschaltung enthält u.a. die beiden invertierenden Operationsverstärker V1 und V2 mit pegelabhängiger Gegenkopplung. Jedem Operationsverstärker V1 und V2 sind zwei Gegenkopplungswege zugeordnet, ein Gegenkopplungsweg für die positive
Halbwelle der Ausgangsspannung des Operationsverstärkers,
in dem die Diode D1 und der Widerstand R2 angeordnet
ist, und ein Gegenkopplungsweg für die negative Halbwelle der Ausgangsspannung des Operationsverstärkers, in dem
die Diode D2 angeordnet ist. Der gezeigten Sprechrichtungserkennungsschaltung wird die von der Mikrofonspannung abgeleitete Signalspannung über den Eingang EM
zugeführt und die von der Lautsprecherspannung abgeleitete Signalspannung wird über den Eingang EL zugeführt. Aus der Zeichnung ist zu erkennen, daß erst bei
Erreichen der Schwellenspannung der Dioden D1 und D2
die Gegenkopplung einsetzt.

Die Ausgangsspannungen der beiden Operationsverstärker
V1 und V2 werden dem Komparator V3 zugeführt. Dieser
Komparator gibt an seinem Ausgang A ein binäres Ausgangssignal ab, je nachdem, an welchem der beiden Operationsverstärker V1 und V2 ein Ausgangssignal auftritt.
Dementsprechend werden dann die Dämpfungsglieder geschaltet. Die Ansprechzeit der Sprechrichtungserkennungsschaltung wird durch die RC-Glieder C1 und R3 bestimmt.
Die Verzögerungszeit bestimmt sich aufgrund der Werte
von C1, R2 und R3. Durch die Widerstände R1 und R2
werden die Aussteuerungsgrenzen der Sprechrichtungserkennungsschaltung festgelegt.

In der dargestellten Sprechrichtungserkennungsschaltung
ist noch ein Operationsverstärker V4 dargestellt, dem
über den Eingang EH eine Hubregelspannung zugeführt
wird, die in Verbindung mit der Einstellung für den
Ruhelageumschaltepunkt am Potentiometer P2 bestimmt,
bei welchem Hub umgeschaltet werden soll. Die eigentliche Ruhelageeinstellung erfolgt mit Hilfe des Potentiometers P1.

- 5 -    VPA 78 P 6243 EUR

Durch Schließen des Schalters S wird die Sprechrichtungserkennungsschaltung in die Sendelage gebracht, so daß auf ungesteuerten Handapparatbetrieb umgeschaltet werden kann.

1 Patentanspruch
1 Figur

Patentanspruch

Schaltungsanordnung für eine sprachgesteuerte Lautfernsprechstation in Fernmelde-, insbesondere Fernsprechanlagen mit kanalindividuellen Verstärkern und mit einer Sprechrichtungserkennungsschaltung, die in Abhängigkeit von einem Spannungsvergleich Dämpfungsglieder in beiden Kanälen so steuert, daß in dem Kanal mit der höheren Sprechspannung die Dämpfung verringert und in dem Kanal mit der niedrigeren Sprechspannung die Dämpfung entsprechend erhöht wird, d a d u r c h   g e k e n n - z e i c h n e t , daß von den Mikrofon- bzw. Lautsprecherspannungen abgeleitete Signalspannungen jeweils einem invertierenden Operationsverstärker (V1, V2) mit pegelabhängiger Gegenkopplung zugeführt werden, wobei sowohl für die positiven als auch die negativen Halbwellen der Ausgangsspannung des Operationsverstärkers ein separater Gegenkopplungsweg (D1, R2; D2) vorgesehen ist und der Ansprechpegel der Gegenkopplung durch in den Gegenkopplungswegen angeordnete Dioden (D1, D2) bestimmt ist, und daß die Ausgangsspannungen der Operationsverstärker (V1, V2) einem Komparator (V3) zugeführt werden, dessen Ausgangssignal auf die Dämpfungsglieder wirkt.

0009591

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 101 735 (BRIDENBAUGH) <br> * Spalte 2, Zeilen 64-68; Spalte 3, Zeilen 7-18; Spalte 5, Zeilen 9-56; Abbildung 2 * <br> -- | Einzige |
| X | US - A - 3 725 585 (MONIAK) <br> * Spalte 2, Zeilen 19-32; Abbildung 2 * <br> -- | Einzige |
| X | US - A - 4 002 854 (PENROSE) <br> * Spalte 2, Zeilen 28-60; Spalte 3, Zeilen 34-44; Abbildungen 1,2 * <br> -- | Einzige |
| X | FR - A - 2 221 885 (NORTHERN ELECTRIC COMPANY) <br> * Seite 15, Zeile 23 - Seite 16, Zeile 25; Abbildungen 1, 6 * <br> ---- | Einzige |

**KLASSIFIKATION DER ANMELDUNG (Int.Cl. 3)**

H 04 M 9/10

**RECHERCHIERTE SACHGEBIETE (Int. Cl. 3)**

H 04 M 9/10
9/08
1/60

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-12-1979 | YOULE |

EPA form 1503.1   06.78